# EUROPÄISCHE PATENTSCHRIFT

(11) **EP 0 908 756 B1**
(45) Veröffentlichungstag und Bekanntmachung des Hinweises auf die Patenterteilung: **25.02.2004**
(21) Anmeldenummer: 98116743.0
(22) Anmeldetag: 04.09.1998
(51) Int. Cl.: G02C 7/04, G02C 11/00, G02C 7/10

(54) **Ophthalmische Linse**
Ophthalmic lens
Lentille ophthalmique

(30) Priorität: 06.10.1997 DE 19744079
(43) Veröffentlichungstag der Anmeldung: 14.04.1999
(73) Patentinhaber: Wöhlk Contact-Linsen GmbH, 24232 Schönkirchen (DE)
(72) Erfinder: Malchow, Volker, 24105 Kiel (DE); Polzhofer, Kurt, Dr., 24232 Schönkirchen (DE); Kuwald, Harald, 24113 Kiel (DE); Fromme, Roland, 24232 Schönkirchen (DE); Haase, Lothar, 24217 Schönberg (DE)
(74) Vertreter: Hamm, Volker, Dr.

(56) Entgegenhaltungen:
- EP-A- 0 032 517
- EP-A- 0 782 031
- DE-A- 2 709 799
- DE-A- 4 001 063
- US-A- 3 597 054
- US-A- 5 189 448
- US-A- 5 598 233
- J.B. KINN ET AL: "A liquid-crystal contact-lens device for measurement of corneal temperature" IEEE TRANSACTIONS ON BIOMEDICAL ENGINEERING, Bd. 20, September 1973, Seiten 387-388, XP002089831

## Beschreibung

Die Erfindung betrifft eine ophthalmische Linse zur Korrektur der Fehlsichtigkeit eines menschlichen Auges.

Unter ophthalmischen Linsen versteht man insbesondere Brillenlinsen, Kontaktlinsen und Intraokularlinsen. Alle diese Linsen sind seit langem Stand der Technik. Die Linsen werden aus einem durchsichtigen Material hergestellt und dienen als Brillenglasersatz.

Aus der US-PS 4.795.248 ist ein Brillenglas bekannt, welches in seinem Inneren zwei Kammern für Flüssigkristalle besitzt. Durch eine außerhalb der Linse angeordnete elektronische Schaltung kann die Refraktion der Linse verändert werden.

Aus der US-PS 4.099.859 ist eine Kontaktlinse bekannt, bei welcher ein homogener innerer Kern mit einer andersartigen äußeren Schicht überzogen ist. Die Einbindung anderer Materialien in das Material einer Kontaktlinse ist beispielsweise aus der GB-PS 2.129.155 und der US-PS 3.034.403 bekannt. In diese Kategorie fällt auch die Kontaktlinse, welche aus der US-PS 4.166.255 bekannt ist.

Es gibt sogenannte "Iris-Print-Kontaktlinsen" für Patienten mit beschädigter Iris und sogenannte "Fun-Kontaktlinsen", bei welchen außerhalb eines durchsichtigen Zentralbereiches die Kontaktlinse gefärbt sind. In beiden Fällen wurden auch thermochrome Farbstoffe verwendet.

Einziges Ziel dieser Färbungen war aber im ersten Anwendungsfall eine Abschattungswirkung für die Augeniris und im zweiten Anwendungsfall eine rein ästhetische Wirkung.

Aus dem Artikel "A Liquid-Crystal Contact-Lens Device for Measurement of Corneal Temperature" von James B. Kinn und Richard A. Tell aus IEEE Trans. Biomed. Eng. 20, 387(1973) ist lediglich eine Kontaktlinse bekannt, bei welcher in einer Kontaktlinse eine Kammer gebildet ist, wobei die Kammerrückseite schwarz beschichtet ist und sich in der Kammer eine Flüssigkeit aus Flüssigkristallen befindet. Diese Kontaktlinse dient der nichtinversiven in-vivo-Messung der Oberflächentemperatur der Kornea, welche durch einen die Kontaktlinse nicht tragenden Arzt durch Betrachtung der von einem Probanden getragenen Kontaktlinse erfolgt. Die Kontaktlinse ist nicht geeignet, von einem Fehlsichtigen auch zur Korrektur seiner Fehlsichtigkeit getragen zu werden.

Der technologische Hintergrund von Flüssigkristallen ist insbesondere aus dem Buch "Advances in Liquid Crystals", Volume 2, Edited by Glenn H. Brown, Academic Press, 1976, S. 73 bis 172 bekannt.

Selbstverständlich sind auch ophthalmische Linsen bekannt, bei welcher sich die Transmission der Linse mit der eingestrahlten Lichtmenge ändert (Sonnenschutzgläser mit variabler Transmission).

Es ist die Aufgabe der Erfindung eine Kontaktlinse zur Korrektur der Fehlsichtigkeit eines menschlichen Auges zu schaffen, welche bei Bedarf eine von den Lichtverhältnissen unabhängige, mit den menschlichen Sinnen erfaßbare Information über sich verändernde Parameter insbesondere der Umwelt liefert.

Diese Aufgabe wird erfindungsgemäß durch den kennzeichnenden Teil des ersten Patentanspruchs gelöst.

Die konkrete Ausgestaltung der erfindungsgemäßen Kontaktlinse kann vielfältiger Natur sein, genau wie die Erfüllung weiterer Aufgaben.

Die erfindungsgemäße ophthalmische Linse (Intraokularlinse, Brillenlinse oder Kontaktlinse) kann die Informationsvermittler-Vorrichtung in einer oder mehreren diskreten Kammern enthalten, mit der Informationsvermittler-Vorrichtung bedruckt sein oder diese in gekapselter Form enthalten. Auf Brillenlinsen kann dies auch durch das aufbringen (Klebefolie, bedruckt oder mit Kammer) geschehen.

Die Informationsvermittler-Vorrichtung kann aus festen oder flüssigen Stoffen bestehen oder aber durch eine elektronische Schaltung gegeben sein.

Die von der Informationsvermittler-Vorrichtung hervorgerufenen Reaktionen bestehen vorzugsweise aus optischen oder akustischen Signalen, insbesondere aus Farbänderungen, welche insbesondere durch Temperatur- oder Druckänderungen (auch z.B. elektrische oder magnetische Felder in der Reinigungskammer von Kontaktlinsen-Reinigungsbehältern) hervorgerufen werden.

Als bevorzugte Anwendungen bei Kontaktlinsen
- deren Sichtbarkeit außerhalb des Auges vor einem Hintergrund oder in der Reinigungsflüssigkeit,
- ein Hinweis auf das Verfallsdatum bei der Benutzung,
- eine Warnung an die behandelnden Ärzte, daß der Patient noch eine Kontaktlinse trägt, oder
- eine Warnung an den Kontaktlinsenträger über einen zu hohen Augeninnendruck.

Desweiteren sind für alle ophthalmischen Linsen insbesondere folgende bevorzugte Anwendungen denkbar:
- eine Warnung vor elektrischen oder magnetischen Feldern (insbesondere für Träger eines Herzschrittmachers) und
- eine Warnung vor schädlichen Strahlungen (UV-Strahlung, Röntgenstrahlung, usw.)

Eines der bevorzugten Anwendungsgebiete einer derartige Kontaktlinse kann beispielsweise die Unterstützung des Fehlsichtigen bzw. Kontaktlinsenträgers beim Handling der Kontaktlinse sein, insbesondere beim Auffinden der Linse im Aufbewahrungsbehälter oder beim Verlust der Kontaktlinse während des Einsetzens oder des Tragens.

Sie kann aber auch beispielsweise dazu verwendet werden, Sanitäter oder Ärzte bei einem Unfall auf ihre Existenz hinzuweisen.

Eine anderes denkbares Einsatzgebiet einer derartigen Kontaktlinse kann die Warnung des Kontaktlinsenträgers vor gewissen Umwelteinflüssen sein (z.B. die Warnung eines Herzschrittmacherträgers vor für ihn gefährlichen elektromagnetischen Feldern, die Warnung eines Kontaktlinsenträgers vor für ihn gefährliche chemische. Bestandteile in der Umgebungsluft oder vor gefährlicher Strahlung, usw.).

Die Erfindung wird im folgenden anhand zweier Ausführungsbeispiele unter Bezugnahme auf die beiliegenden Figuren, näher erläutert, wobei die beiden nachfolgenden, Beispiele keinen abschließenden Charakter für die Erfindung haben und weitere vorteilhafte Ausgestaltungen der Erfindung beinhalten.

Es ist dargestellt in
Figur 1 eine Kontaktlinse mit einer Kammer; und in
Figur 2 eine Brillenlinse mit einer Kammer.

Eine wesentliche Verbesserung der Handhabbarkeit von Kontaktlinsen (1) wird erreicht, wenn die Kontaktlinse (1) in einer Reinigungsflüssigkeit oder auf einem Untergrund gut sichtbar ist.

Deshalb ist es vorteilhaft, wenn die Kontaktlinse (1) ihr Aussehen (insbesondere ihre Farbe) ändern kann. Dieser Farbumschlag kann insbesondere durch veränderte Druckverhältnisse, durch elektrische oder magnetische Felder oder durch Temperaturänderungen hervorgerufen werden.

Dabei ist insbesondere zu bedenken, daß der Träger und Nutzer der Kontaktlinse (1) selber fehlsichtig ist und deshalb die Kontaktlinse (1) schlechter sehen kann als ein normalsichtiger. Nimmt man die Kontaktlinse (1) ab oder verliert sie, ist sie normalerweise sehr schwer auffindbar.

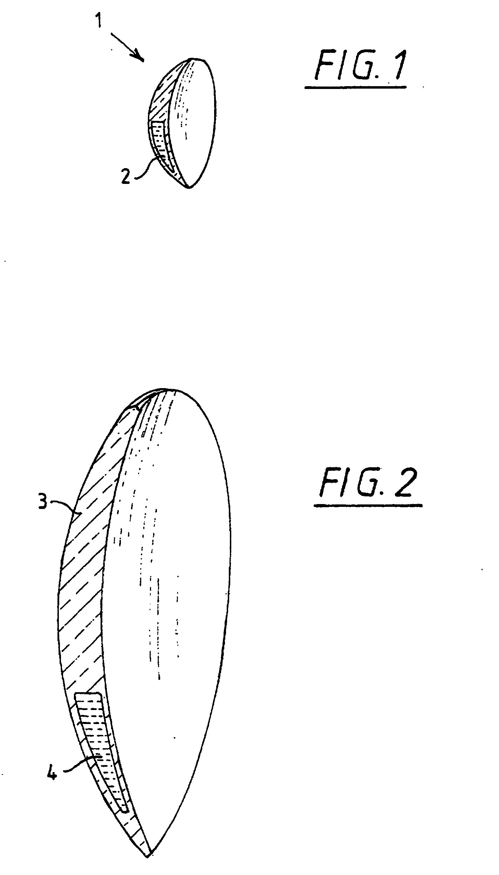

Um diesen Farbumschlag zu realisieren, besitzt die in der Figur 1 dargestellte erfindungsgemäße Kontaktlinse (1) eine Kammer (2) zur Aufnahme einer entsprechend geeigneten Flüssigkeit, eines geeigneten festen Formkörpers oder einer elektronischen Schaltung mit Energiespeicher. Als geeignete Flüssigkeit kommen insbesondere Flüssigkristalle in betracht. Aber auch Brillenlisen (3) können mit einer entsprechend großen Kammer (4) ausgestattet werden.

Die Kontaktlinse (1) ist in Sandwichbauweise hergestellt und besitzt einen Hohlraum (2). Dieser Hohlraum (2) wird mit einem thermochromen Farbstoff vollständig aufgefüllt, der oberhalb ungefähr 29°C klar und transparent ist und unterhalb dieser Temperatur deutlich milchig, grünlich gefärbt ist (möglicher Lieferant für diesen Farbstoff BN/G29C wäre die Firma Hallcrest Ltd, 8-9, Stepnell Reach, 541 Blandford Road, Poole, Dorset, BH16 5BW, UK.).

Durch das Einbringen des Farbstoffes in die dafür vorgesehene Kammer (2) in der Kontaktlinse (1) z.B. mit einem thermochromen Farbstoff kann aber ein Temperaturwechsel, welcher auftritt, wenn die Kontaktlinse (1) aus dem Auge entnommen wird, zu einer Färbung der Kontaktlinse (1) führen.

Dies erleichtert die Handhabung der Kontaktlinse (1), insbesondere beim Auffinden der Linse (1) in Aufbewahrungsbehältern oder beim Verlust der Kontaktlinse (1) während des Einsetzens oder Tragens. Außerdem erleichtert dies das Auffinden der Kontaktlinse (1) durch den Fehlsichtigen bzw. Träger sehr.

Durch die Verwendung von thermochromen Farbstoffen in einer Kontaktlinse (1) mit einer Farbe, die bei Temperaturen, wie sie auf der Augenoberfläche herrschen (ca. 35°), im wesentlichen durchsichtig, eventuell leicht getönt ist, aber bei normaler Zimmertemperatur deutlich gefärbt ist, wird so erreicht, daß die Kontaktlinse (1) von einem Fehlsichtigen gut insbesondere in einem Aufbewahrungsbehälter zu erkennen ist. Diese Färbung kann die ganze Linse oder auch nur einen Teil, z.B. die Haptik, betreffen.

Auch ist eine zwei- oder mehrfarbige Ausführung denkbar. Bei der Wahl einer hellen (z.B. weiß, gelb) und einer dunklen (z.B. blau, grün) Farbe wäre sichergestellt, daß die Linse sowohl auf einem dunklen als auch auf einem hellen Untergrund gut zu erkennen ist. Dies hat für den Linsenträger den Vorteil, daß er die Linse leicht wiederfindet, sollte er sie aus Versehen verloren haben.

Weitere geeignete Farben oder Flüssigkristalle findet man vorzugsweise im Medizinbereich. Dort werden solche Farben eingesetzt, um Temperaturunterschiede auf der Körperoberfläche sichtbar zu machen. Hier handelt es sich insbesondere um Chloresterderivate, die physiologisch unbedenklich sind. Es sind aber auch Flüssigkristalle als mögliche Farbstoffe verwendbar, wie sie in Digitalthermometern (z.B. Aqariumthermometer), Anwendung finden.

Die Tabelle 10 auf Seite 135 aus dem Artikel "A Liquid Crystal Contact Lens Device for Measurement of Cornear Temperature" zeigt verschiedene Mischungen, die unterschiedliche Temperaturbereiche abdecken. Die hier gezeigten Substanzen können als Ausgangspunkt für die Wahl des geeigneten Farbstoffes herangezogen werden.

Man kann aber auch die Kontaktlinse ohne eine Kammer ausstatten und sie mit geeigneten Farbstoffen einfärben. Hier ist insbesondere an ein Bedrucken der Linse mit einer geeigneten Flüssigkeit als Farbstoff zu denken. Auch hier ist wie bei allen anderen in der Beschreibung erwähnten Varianten der erfindungsgemäßen ophthalmischen Linse darauf zu achten, daß die Kontaktlinse im getragenen Zustand homogen transparent ist, wie dies bei einer normalen Kontaktlinse der Fall sein sollte.

Insbesondere bei wasserlöslichen Farben ist auch eine nachträgliche Färbung von Linsen denkbar, da solche Farben aber unter Umständen ausbleichen, ist auch an eine Farbe zu denken, die als Flüssigkeit, Tablette, Pulver, etc. beim Träger in regelmäßigen Abständen, z.B. alle.zwei Wochen, angewendet wird.

Man kann aber auch den Farbstoff in der Kontaktlinse einkapseln, um ihn in der Linse zu deponieren. Diese Kapseln beinhalten dann kleinere Mengen der geeigneten Flüssigkeit in einen gekapselten Zustand. Denkbar wären insbesondere gekapselte Flüssigkristalle im Randbereich einer Kontaktlinse zu implantieren. Auf der Seite 141 im zweiten Kapitel desselben oben erwähnten Aufsatzes werden verschiedene Verfahren vorgestellt, die hierfür geeignet sind.

Die Kontaktlinse kann auch mit einem Farbstoff versehen werden, der durch Änderung der seiner Farbe bei Anwesenheit eines magnetischen Feldes insbesondere in einem Aufbewahrungsbehälter reagiert. Dasselbe läßt sich für ein elektrisches Feld realisieren.

In oder auf die Kontaktlinse können aber auch Farbstoffe oder gekapselte Kristalle eingebracht werden, um andere Funktionen wahrzunehmen. Diese Funktionen könnten aber auch durch elektronische Schaltungen mit einem Signalgeber erfüllt werden.

Aus dem Artikel Liquit-Crystal Contact-Lens Device for Measurement of Corneal Temperature sind auch Flüssigkristalle bekannt, welche bei Abwesenheit von Druck, wie er am Auge durch das Lid erzeugt wird, farbig und sonst klar ist.

Die Kontaktlinse kann auch mit elektronischen Schaltkreisen versehen, die entsprechend auf die aufgeführten Parameter reagieren. Diese Reaktion können z.B. akustisch oder optische Signale sein.

Insbesondere ein akustisches Signal hat zusätzlich folgenden Vorteil. Nimmt man als Kriterium für das ordnungsgemäße Tragen der Linse eine zeitlich unterschiedliche Drucksituation (Lidschlag) an, würde bei einem Unfall mit ausbleibendem Lidschlag das Signal einem Helfer darauf aufmerksam machen, daß die Linse entfernt werden muß.

Eine besonders komfortable Variante der erfindungsgemäßen Linse besteht darin, daß die Information über interessierende Umgebungsparameter, wie oben erwähnt, als ein sich beispielsweise in der Länge veränderlicher Strich dargestellt wird, der über z.B. holographische Elemente in eine angenehme Sehentfernung projiziert wird. Aber auch andere Darstellungsarten sind je nach Anwendungsfall denkbar (insbesondere Kreis-, Diagramm- und andere Darstellungsarten).

Zusammengefaßt besitzt die erfindungsgemäße Kontaktlinse mindestens eine Vorrichtung, die auf Unterschiede von Parametern innerhalb und außerhalb des Auges reagieren. Die Parameter können dabei insbesondere z.B. Temperatur, Druck, elektrische oder magnetische Felder sein.

Die Reaktion der Vorrichtung kann z.B. bestehend in einem Wechsel des Aussehens (Übergang von Transparenz zu farbig), oder in einem akustischen bzw. optischen Signal. Die Vorrichtung kann Teile oder die ganze Kontaktlinse umfassen. Die Kontaktlinse kann mit einer oder mehreren verschiedenen unabhängigen Vorrichtungen versehen werden.

Generell kann jede ophthalmische Linse (Intraokulare Linse, Kontaktlinse (1) und Brillenlinse (3)) als Signalgeber für den Nutzer und Träger verändert werden.

Als Einsatzgebiete eignen sich insbesondere
- Temperaturmessung als Information für den Nutzer
- Temperaturmessung zur Verbesserung der Handhabbarkeit
- Druckmessung zur Warnung vor zu hohem Augeninnendruck
- Druckmessung zur Verbesserung der Handhabbarkeit
- Strahlungssensor insbesondere für radioaktive, elektrische oder magnetische Felder oder spezielle Frequenzbereiche der Strahlung (UV-Strahlung, IR-Strahlung, Röntgenstrahlen, Mikrowellenstrahlung, Ultraschall, usw.).

Wird bei einer Brillenlinse (3) eine Kammer (4) zur Aufnahme der Informationsvermittler-Vorrichtung geschaffen, so kann der Kammerverschluß vorzugsweise durch einen Kunststoff verschlossen werden, welcher die Öffnung der Kammer (4) letztendlich verschließt. Dieser Kunststoff kann auf die Kammeröffnung aufgegossen werden (z.B. um danach den Kunststoff zu polymerisieren) oder ein Plättchen (aus Kunststoff oder Silikat) kann in die Brillenlinse (3) aus Silikat oder Kunststoff eingeklebt werden. Bei der Auswahl des Kammerverschlusses ist insbesondere auf einen geeigneten Brechungsindex des verwendeten Materials zu achten.

## Patentansprüche

1. Ophthalmische Linse (1,3) zur Korrektur der Fehlsichtigkeit eines menschlichen Auges,
**dadurch gekennzeichnet, dass** die Linse einen Farbstoff umfasst, der auf Änderungen der Temperatur mit einer wahrnehmbaren Farbänderung reagiert.

2. Ophthalmische Linse nach Anspruch 1,
**dadurch gekennzeichnet, dass** die Linse eine Kontaktlinse (1) ist, die auf die Hornhaut eines Kontaktlinsenträgers auflegbar ist, und die eine konvexe Außen- und eine konkave Innenfläche aufweist.

3. Ophthalmische Linse nach Anspruch 1 oder 2,
**dadurch gekennzeichnet, dass** der Farbstoff in die Linse eingebracht ist.

4. Ophthalmische Linse nach Anspruch 3,
**dadurch gekennzeichnet, dass** sich der in die Linse eingebrachte Farbstoff in einem kammerartigen Raum (2,4) befindet.

5. Ophthalmische Linse nach Anspruch 1 oder 2,
**dadurch gekennzeichnet, dass** der Farbstoff auf einer der Außenflächen der Linse aufgebracht ist.

6. Ophthalmische Linse nach einem der Ansprüche 1 bis 5,
**dadurch gekennzeichnet, dass** die wahrnehmbare Farbänderung nicht auf der gesamten Nutzfläche der Linse erfolgt.

## Claims

1. Ophthalmic lens (1, 3) to correct defective vision in a human eye, **characterised in that** the lens comprises a dyestuff which reacts to changes in temperature by undergoing a perceptible change in colour.

2. Ophthalmic lens as claimed in claim 1, **characterised in that** the lens is a contact lens (1) which can be placed on the cornea of a contact lens wearer and which comprises a convex outer surface and a concave inner surface.

3. Ophthalmic lens as claimed in claim 1 or 2, **characterised in that** the dyestuff is introduced into the lens.

4. Ophthalmic lens as claimed in claim 3, **characterised in that** the dyestuff introduced into the lens is located in a chamber-like space (2, 4).

5. Ophthalmic lens as claimed in claim 1 or 2, **characterised in that** the dyestuff is applied on one of the outer surfaces of the lens.

6. Ophthalmic lens as claimed in any one of claims 1 to 5, **characterised in that** the perceptible change in colour does not occur on the entire useful surface of the lens.

## Revendications

1. Lentille ophtalmique (1,3) destinée à corriger la mauvaise vue d'un oeil chez l'homme, **caractérisée en ce que** la lentille comprend un colorant qui réagit aux changements de température avec une modification de couleur perceptible.

2. Lentille ophtalmique selon la revendication 1, **caractérisée en ce que** la lentille (1) est une lentille de contact qui peut être placée sur la cornée d'un porteur de lentilles de contact et qui présente une surface externe convexe et une surface interne concave.

3. Lentille ophtalmique selon la revendication 1 ou 2, **caractérisée en ce que** le colorant est introduit dans la lentille.

4. Lentille ophtalmique selon la revendication 3, **caractérisée en ce que** le colorant introduit dans la lentille se trouve dans un espace de type chambre (2,4).

5. Lentille ophtalmique selon la revendication 1 ou 2, **caractérisée en ce que** le colorant est déposé sur l'une des surfaces externes de la lentille.

6. Lentille ophtalmique selon l'une quelconque des revendications 1 à 5, **caractérisée en ce que** la modification perceptible de couleur ne s'effectue pas sur toute la surface utile de la lentille.
